# FASCICULE DE BREVET EUROPEEN

(11) **EP 3 593 017 B1**
(45) Date de publication et mention de la délivrance du brevet: **19.01.2022**
(21) Numéro de dépôt: 18704049.8
(22) Date de dépôt: 22.01.2018
(51) Int. Cl.: F16H 59/70, F16H 61/12, F16H 61/28

(54) **PROCEDE ET DISPOSITIF DE CONTROLE DES CHANGEMENTS DE RAPPORTS SUR UNE TRANSMISSION DE VEHICULE HYBRIDE**
VERFAHREN UND VORRICHTUNG ZUR STEUERUNG VON ÜBERSETZUNGSÄNDERUNGEN AN EINEM HYBRIDFAHRZEUGGETRIEBE
METHOD AND DEVICE FOR CONTROLLING CHANGES IN GEAR RATIO ON A HYBRID VEHICLE TRANSMISSION

(30) Priorité: 10.03.2017 FR 1751980
(43) Date de publication de la demande: 15.01.2020
(73) Titulaire: Renault S.A.S., 92100 Boulogne-Billancourt (FR); Nissan Motor Co. Ltd, Yokohama-Shi, Kanagawa 221-0023 (JP)
(72) Inventeur: CHANTREL, Cédric, 94220 Charenton le Pont (FR); CHAMEROY, Adrien, 78960 Voisins-le-Bretonneux (FR); LE-BRAS, Ronan, 75013 Paris (FR)
(74) Mandataire: Rougemont, Bernard
(86) Numéro de dépôt international: PCT/FR2018/050145
(87) Numéro de publication internationale: WO 2018/162809

(56) Documents cités:
- DE-A1-102007 049 142
- DE-A1-102008 028 899
- FR-A1- 3 022 495
- US-A- 4 944 194
- US-A1- 2002 125 094

## Description

L'invention concerne le contrôle des transmissions automatiques, notamment de groupe motopropulseur (GMP) de véhicule hybride, regroupant le couple de plusieurs actionneurs (moteurs thermiques et machines électriques) en direction des roues du véhicule, sur différents rapports de transmission, par l'intermédiaire d'un différentiel.

Elle s'applique aux transmissions de ce type, dans lesquelles l'engagement et le désengagement des rapports est assuré par des systèmes de couplage pilotés sans synchroniseurs, à crabots ou « clabots », où des crabots mobiles axialement sur un arbre sont pilotés par l'intermédiaire de fourchettes de commande en direction de crabots, qui sont fixes axialement et solidaires de pignons tournant fou sur cet arbre, pour mettre en prise l'arbre et le pignon, afin de transmettre le couple aux roues.

Plus précisément, cette invention a pour objet un procédé de contrôle des changements de rapport sur une transmission de véhicule hybride, regroupant le couple de plusieurs actionneurs sur différents rapports de transmission en direction des roues du véhicule, sous le contrôle de plusieurs coupleurs à crabots , dont au moins deux coupleurs commandés par un doigt commun déplaçable par un moteur de sélection dans une première direction (Y) entre deux lignes de passage parallèles pour sélectionner l'une d'elles, et par un moteur de passage dans une deuxième direction (X) orthogonale à la première pour engager l'une ou l'autre des deux vitesses en passant par une position neutre intermédiaire.

Elle a également pour objet un dispositif de contrôle des changements de rapport sur une transmission de véhicule hybride, regroupant le couple d'un moteur thermique relié à un arbre primaire plein, d'une machine électrique principale reliée à un arbre primaire creux concentrique de l'arbre primaire plein, et d'une machine électrique secondaire reliée à un arbre de transfert vers les arbres primaires plein et creux, sur un arbre de sortie commun en direction des roues du véhicule, sous le contrôle de trois coupleurs à crabots, disposés respectivement sur l'arbre primaire plein, sur l'arbre secondaire et sur l'arbre de transfert, le premier et le troisième coupleur étant commandés par un doigt commun déplaçable par un moteur de sélection dans une première direction entre deux lignes de passage parallèles, et par un moteur de passage dans une deuxième direction orthogonale à la première pour engager l'un ou l'autre de deux rapports.

La publication FR 3 007 696, à laquelle on pourra se référer, décrit une architecture de transmission hybride à trois arbres et deux machines électriques, utilisant trois systèmes de couplage crabots, dont le pilotage nécessite une connaissance fiable de l'état d'engagement ou de désengagement de chacun d'eux.

Le pilotage des systèmes d'actionnement des crabots mobiles et des fourchettes, nécessite un retour d'information permanent sur la position exacte des fourchettes ou des crabots mobiles, à l'égard des crabots fixes et des pignons fous. L'information de position des fourchettes ou des crabots, est normalement délivrée par des capteurs de position.

Par la publication, FR 3 030 005, on connaît un procédé de contrôle de la position limite de désengagement d'un crabot mobile, dans une transmission de GMP hybride à systèmes de couplage pilotés. Selon ce procédé, on acquiert des valeurs de position des crabots à partir de capteurs de mesure de position des fourchettes de commande des crabots.

En cas de défaillance d'un capteur, le pilotage des systèmes d'actionnement risque d'être perturbé. Dans ces circonstances, on cherche à préserver la disponibilité du GMP pour le conducteur.

Par la publication US 4 944 194 on connaît un procédé de contrôle de changements de rapport dans le cas de défaillance d'un capteur de position d'un coupleur.

La présente invention a pour but de confirmer que l'état d'une chaîne cinématique de transmission est au neutre, en l'absence, ou en cas de défaillance, d'un capteur de position d'une fourchette de commande de crabot.

Dans ce but, elle propose que, lorsqu'on ne dispose pas d'une information fiable sur la position axiale en (X) du crabot d'un coupleur commandé par le doigt commun,
- on commande l'actionneur de passage (Ms) en boucle ouverte en position neutre, et
- on actionne l'actionneur de sélection (Ms), du doigt commun, dans une position de sélection pendant un délai déterminé
- on observe le déplacement effectif de la sélection pour ne pas autoriser certains engagements, dans le cas d'une absence de déplacement ou d'un déplacement trop faible où le neutre ne peut pas être confirmé.

De préférence :
- lorsque la position de sélection recherchée est atteinte à l'expiration du délai, tous les rapports de la transmission sont autorisés, après que la position neutre d'un coupleur primaire est également confirmée, et
- lorsque la position de sélection recherchée n'est pas atteinte à l'expiration du délai, le pilotage en sélection est arrêté, et aucun des rapports engagés par les coupleurs n'est autorisé, si la position neutre du coupleur primaire reste indéfinie.

La présente invention sera mieux comprise à la lecture de la description suivante d'un mode de réalisation non limitatif de celle-ci, en se reportant aux dessins annexée, sur lesquels :
- les figures 1 à 4 sont des schémas d'architecture simplifiée, du même GMP hybride,
- la figure 5 illustre le fonctionnement des trois coupleurs de la boîte,
- la figure 6 montre la grille de sélection et d'engagement d'un doigt de commande,
- et la figure 7 est le logigramme de la stratégie proposée.

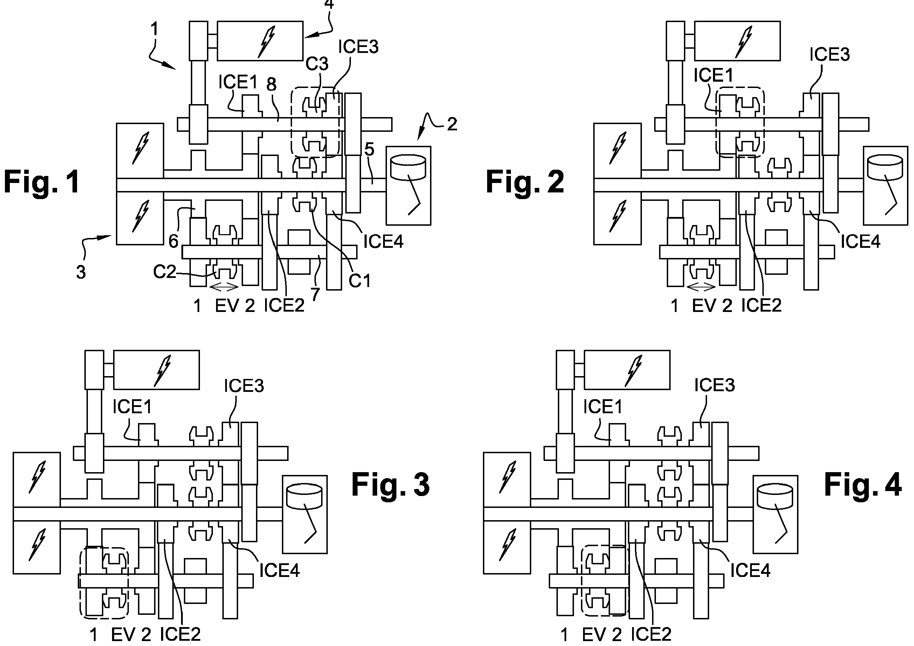

Les figures 1 à 4 illustrent un exemple de transmission hybride à trois arbres et deux machines électriques, utilisant trois systèmes de couplage à crabots, dont le fonctionnement est illustré par la publication citée. La transmission comporte trois actionneurs (moteur thermique 2, machine électrique principale 3, machine électrique secondaire 4), un arbre primaire plein 5 relié au moteur thermique, un arbre primaire creux 6 relié à la machine électrique principale 3, un arbre secondaire 7, et un arbre de renvoi 8 relié à la machine électrique secondaire. Les rapports sont enclenchés par trois coupleurs à crabots C1, C2, C3, dépourvus de synchroniseurs mécaniques :
- un premier coupleur, dit coupleur primaire C1, sur l'arbre primaire plein 5, permet d'enclencher un rapport thermique ICE4 long à droite et d'enclencher un rapport thermique ICE2 court à gauche,
- un deuxième coupleur, dit coupleur secondaire C2, sur l'arbre secondaire, permet d'enclencher deux rapports électriques EV1 et EV2,
- un troisième coupleur, dit coupleur de transfert C3 sur l'arbre de renvoi 8, permet de transférer le couple de la machine électrique secondaire sur l'arbre secondaire 7 (à droite) ou sur l'arbre primaire creux 6 (à gauche).

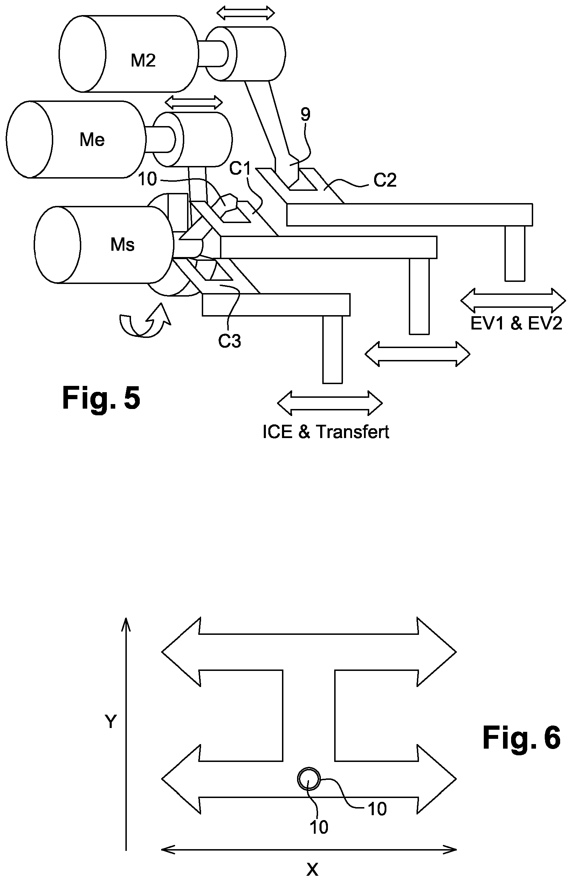

Les trois coupleurs C1, C2, C3 peuvent être commandés conformément à la figure 5 où :
- le coupleur secondaire C2 commandé par un doigt 9 déplacé en translation par un moteur d'actionnement M2, indépendamment des coupleurs C1 et C3,
- les coupleurs C1 et C3, sont commandés par un doigt commun 10, soumis à l'action d'un moteur de sélection Ms, plaçant le doigt dans l'encoche du coupleur C1 ou C3, et d'un moteur de passage Me pour déplacer le coupleur C1 ou C3 sélectionné.

La transmission regroupe le couple du moteur thermique 1 relié à un arbre primaire plein 5, de la machine électrique principale 3 reliée à l'arbre primaire creux 6 concentrique de l'arbre primaire plein 5 et de la machine électrique secondaire 4 reliée à l'arbre de transfert 8 vers les arbres primaires plein et creux 5, 6, sur l'arbre de sortie commun 7 en direction des roues du véhicule. Les changements de rapport s'effectuent sous le contrôle des trois coupleurs à crabots C1, C2, C3 disposés respectivement sur l'arbre primaire plein 5, sur l'arbre secondaire 6 et sur l'arbre de transfert 8. Le premier et le troisième coupleur C1 et C3 sont commandés par le même doigt 10 déplaçable par le moteur de sélection Ms dans une première direction (Y) entre deux lignes de passage parallèles, et par un moteur de passage Me dans une deuxième direction (X) orthogonale à la première pour engager l'une ou l'autre de deux vitesses sur la ligne sélectionnée.

Le doigt commun 10 se déplace sur une grille en H illustrée par la figure 6, qui montre les déplacements possibles du doigt 10 : en Y pour sélectionner un coupleur C1 ou C3, et en X pour déplacer le coupleur sélectionné. La méthode de contrôle proposée tire profit du fait qu'une telle grille de sélection empêche tout déplacement selon l'axe Y si la position en X n'est pas « neutre ». Après avoir commandé un ordre de désengagement d'un rapport, et après un temps d'attente, le système demande un déplacement de l'actuateur de sélection Ms selon l'axe Y, et observe le déplacement effectif de la sélection :
- dans le cas d'une absence de déplacement ou d'un déplacement trop faible, le neutre ne peut pas être confirmé : la transmission est déclarée défaillante, et certains engagements ne sont pas autorisés,
- dans le cas d'un déplacement suffisant, le neutre est confirmé, et toutes les séquences de passages de rapport peuvent être poursuivies.

Le procédé de détection de la position neutre d'un coupleur, tel que le coupleur primaire C1 permet de confirmer la position neutre de la transmission, et de poursuivre les séquences de passages de rapport, qui sont ainsi autorisées même en cas de défaillance du capteur de position de la fourchette.

Les figures 1 à 4 montrent que la transmission considérée dispose de quatre rapports thermiques, ICE1 à ICE4, de deux rapports électriques EV1 et EV2, ainsi que de leurs combinaisons hybrides. Pour des raisons de sécurité, certains de ces rapports doivent être interdits dès lors que la position du crabot primaire C1 est indéfinie.

Les figures 1 et 2 indiquent les rapports qui sont autorisés si le crabot primaire C1 est en position neutre sécurisée : les rapports thermiques ICE1 et ICE3, respectivement 1^{er} rapport thermique ICE1 sur la figure 1 et 3^{ème} rapport thermique ICE3 sur la figure 2 ; sont également autorisés les rapports électriques EV1 et EV2 par déplacement du coupleur secondaire C2, ainsi que les combinaisons hybrides des deux rapports électriques EV1 et EV2 avec les rapports thermiques ICE1 et ICE3.

Les figures 3 et 4 montrent les seuls rapports qui sont autorisés si le crabot primaire C1 est détecté en position « indéfinie » : les deux rapports électriques EV1 et EV2, à l'exclusion de toute combinaison hybride de ces derniers avec les rapports thermiques.

Les signaux d'entrée dans la boucle de commande sont les suivants :
- *Claw_prim_psn*_*vld* : indicateur de validité de la position du crabot de l'arbre primaire (=0 si NOK, =1 si OK),
- *Safety_claw_prim_psn_vld* : indicateur de validité de la position du crabot de l'arbre primaire redondé (sécurité de niveau deux) (=0 si NOK, =1 si OK),
- *Claw_prim_psn_reg* : statut de la régulation de position du crabot primaire (=0 si non active, ou =1 si active).
- *Selection*_*psn :* Mesure de la position de sélection du crabot primaire (=0 si état bas, =1 si état haut).

Les signaux de sortie sont les suivants :
- *Prim_neut_chr_act* : indique le statut de la stratégie (=0 si non active ou =1 si active),
- *Claw prim psn sp* : consigne de position axiale (neutre ou rapport engagé) du crabot primaire,
- *Selection_psn_sp :* consigne de position de sélection du crabot primaire et (correspondant à celle du doigt 10) (=0 si état bas, =1 si état haut),
- *Claw_prim_chk_chr*: information qui indique le résultat de la stratégie (=0 si position indéfinie ou =1 si position Neutre),
- *Ice_switch_req* : demande de coupure moteur thermique (=0 si pas de requête de coupure ou =1 si requête de coupure).

La méthode proposée pour limiter le nombre de rapports autorisés lorsqu'on ne dispose pas d'une information fiable sur la position axiale en (X) du crabot d'un coupleur C1 commandé par le doigt 10, est de :
- commander l'actionneur de passage Me en boucle ouverte en position neutre, et
- de commander l'actionneur de sélection Ms, dans une position de sélection pendant un délai déterminé.

Lorsque la position de sélection recherchée est atteinte à l'expiration du délai, tous les rapports de la transmission sont autorisés, après que la position neutre d'un coupleur primaire (C1) est également confirmée. En revanche, lorsque la position de sélection recherchée n'est pas atteinte à l'expiration du délai, le pilotage en sélection est arrêté, et aucun des rapports engagés par les coupleurs (C1, C3) n'est autorisé, si la position neutre du coupleur primaire (C1) reste indéfinie.

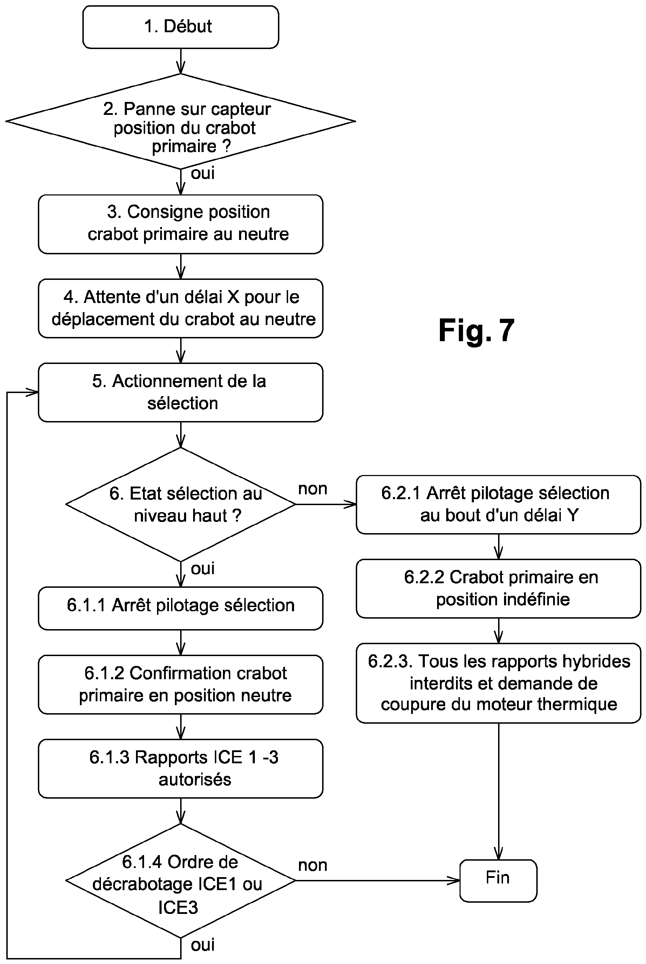

Le procédé est détaillé sur le logigramme de la figure 7, dont l'enchaînement est le suivant.

### Etape 1

On surveille l'état du signal de mesure de position axiale du crabot primaire (neutre ou rapport engagé) C1 via les indicateurs de validité venant du niveau de contrôle principal (*Claw_prim_psn_vld*) et du niveau de contrôle redondant (*Safety_claw_prim_psn*_*vld*). Ces conditions principales autorisent les étapes suivantes de l'algorithme.

### Etape 2

Lorsque l'un de ces deux indicateurs de validité signale une défaillance (*Claw prim_psn_vld* OU *Safety_claw_prim_psn*_*vld* = NOK), on considère qu'une défaillance est présente sur le capteur de position axiale du crabot primaire. L'information de position n'est plus fiable, on la considère indéfinie.

### Etape 3

Ne disposant plus d'une position axiale du crabot primaire fiable, il convient de mettre en sécurité le système et de commander en boucle ouverte le crabot primaire (*Claw_prim_psn*_*sp*) en position neutre.

### Etape 4

On temporise pendant un délai X calibrable, comprenant le temps d'exécution du déplacement du crabot primaire d'un rapport thermique engagé (ICE2 ou ICE4), plus une marge de sécurité.

### Etape 5

On actionne l'actionneur de sélection Ms, du doigt 10 « *sélection* » sur le schéma (*Selection*_*psn*_*sp = 1*) pendant un délai Y calibrable. On déclare par ailleurs la stratégie comme active (*Prim_neut*_*chr_act = 1*) .

### Etape 6

Durant toute la durée de l'actionnement, on surveille l'atteinte de la « *sélection* » en position haut. Si on atteint le niveau haut (*Selection*_*psn = 1*) :
- on arrête immédiatement le pilotage de la sélection (*Selection_psn_sp* = 0 ET *Prim_neut_chr_act* = 0) (étape 6.1.1),
- on déclare que le crabot primaire est en position sécurisée au neutre (*Claw_prim_chk_chr = 1*) (étape 6.1.2),
- les rapports hybrides (Hyb 11/12/31/32) et thermiques (ICE1 ou ICE3) sont autorisés (voir figure 3). (étape 6.1.3),
- la stratégie est relancée lors d'un nouveau dé-crabotage de rapport, (étape 6.1.4) pour s'assurer que le crabot primaire (C1) est toujours au neutre à chaque nouvel ordre de dé-crabotage.

Si on n'atteint pas le niveau haut (*Selection_psn = 0*) au bout du délai Y :
- on arrête le pilotage de la sélection (*Selection*_*psn*_*sp* = 0 ET *Prim_neut_chr_act =* 0) (étape 6.2.1),
- on déclare que le crabot primaire est en position indéfinie (*Claw prim chk chr* = 0) (étape 6.2.2),
- tous les rapports hybrides et thermiques sont interdits jusqu'à réparation de la défaillance sur le capteur de position crabot primaire. Par ailleurs on demande la coupure du moteur thermique (*Ice_switch_req* = 1).

## Revendications

1. Procédé de contrôle des changements de rapport sur une transmission de véhicule hybride, regroupant le couple de plusieurs actionneurs sur différents rapports de transmission en direction des roues du véhicule, sous le contrôle de plusieurs coupleurs à crabots (C1, C2, C3), dont au moins deux coupleurs (C1, C3) commandés par un doigt commun (10) déplaçable par un moteur de sélection (Ms) dans une première direction (Y) entre deux lignes de passage parallèles pour sélectionner l'une d'elles, et par un moteur de passage (Me) dans une deuxième direction (X) orthogonale à la première pour engager l'une ou l'autre de deux vitesses en passant par une position neutre intermédiaire, **caractérisé en ce que**, lorsqu'on ne dispose pas d'une information fiable sur la position axiale en (X) du crabot d'un premier coupleur (C1) commandé par le doigt (10), on s'assure que ce crabot est toujours au neutre à chaque nouvel ordre de décrabotage d'un rapport,
- en commandant l'actionneur de passage en boucle ouverte en position neutre,
- en actionnant l'actionneur de sélection (Ms), du doigt de commande commun (10) dans une position de sélection pendant un délai déterminé, et
- en observant le déplacement effectif de la sélection pour ne pas autoriser certains engagements, dans le cas d'une absence de déplacement ou d'un déplacement trop faible où le neutre ne peut pas être confirmé

2. Procédé de contrôle selon la revendication 1, **caractérisé en ce que** :
- lorsque la position de sélection recherchée est atteinte à l'expiration du délai, tous les rapports de la transmission sont autorisés, après que la position neutre du premier coupleur (C1) est également confirmée, et
- lorsque la position de sélection recherchée n'est pas atteinte à l'expiration du délai, le pilotage en sélection est arrêté, et aucun des rapports engagés par les coupleurs (C1, C3) n'est autorisé, si la position neutre du premier coupleur (C1) reste indéfinie.

3. Procédé de contrôle selon la revendication 1 ou 2, **caractérisé en ce que** le délai comprend le temps d'exécution du déplacement du crabot du premier coupleur (C1) d'un rapport au neutre, plus une marge de sécurité.

4. Procédé de contrôle selon la revendication 1, 2 ou 3, **caractérisé en ce que**, lorsque l'état du signal de mesure de position axiale du premier coupleur (C1) est défaillant, la position de ce coupleur est considérée comme indéfinie.

5. Dispositif de contrôle des changements de rapport sur une transmission de véhicule hybride, regroupant le couple d'un moteur thermique (1) relié à un arbre primaire plein (5), d'une machine électrique principale (3) reliée à un arbre primaire creux (6) concentrique de l'arbre primaire plein (5) et d'une machine électrique secondaire (4) reliée à un arbre de transfert (8) vers les arbres primaires plein et creux (5, 6), sur un arbre de sortie commun en direction des roues du véhicule, sous le contrôle de trois coupleurs à crabots (C1, C2, C3) disposés respectivement sur l'arbre primaire plein (5), sur l'arbre secondaire (6) et sur l'arbre de transfert (8), le premier et le troisième coupleur (C1) et (C3) étant commandés par un même doigt (10) déplaçable par un moteur de sélection (Ms) dans une première direction (Y) entre deux lignes de passage parallèles, et par un moteur de passage (Me) dans une deuxième direction (X) orthogonale à la première pour engager l'une ou l'autre de deux vitesses sur la ligne sélectionnée, **caractérisé en ce que**, lorsqu'on ne dispose pas d'une information fiable sur la position axiale en (X) du crabot d'un premier coupleur (C1), on s'assure que son crabot est toujours au neutre à chaque nouvel ordre de décrabotage d'un rapport,
- en commandant l'actionneur de passage (Me) en boucle ouverte en position neutre,
- en actionnant l'actionneur de sélection (Ms), dans une position de sélection pendant un délai déterminé, et
- en observant le déplacement effectif de la sélection pour ne pas autoriser certains engagements, dans le cas d'une absence de déplacement ou d'un déplacement trop faible, où le neutre ne peut pas être confirmé

6. Dispositif de contrôle selon la revendication 5, **caractérisé en ce que** :
- lorsque la position de sélection recherchée est atteinte à l'expiration du délai, tous les rapports de la transmission sont autorisés, après que la position neutre du premier coupleur (C1) est également confirmée, et
- lorsque la position de sélection recherchée n'est pas atteinte à l'expiration du délai, le pilotage en sélection est arrêté, aucun des rapports engagés par les coupleurs (C1, C3) commandés par le même doigt n'est autorisé, si la position neutre du premier coupleur (C1) reste indéfinie.

7. Dispositif de contrôle selon la revendication 5 ou 6, **caractérisé en ce que** le délai comprend le temps d'exécution du déplacement du crabot du coupleur d'un rapport thermique au neutre, plus une marge de sécurité.

8. Dispositif de contrôle selon l'une des revendications 5 à 7, **caractérisé en ce que** lorsque l'état du signal de mesure de position axiale du premier coupleur (C1) est défaillant, la position de ce coupleur est considérée comme indéfinie.

## Patentansprüche

1. Verfahren zur Steuerung der Übersetzungsänderungen an einem Hybridfahrzeuggetriebe, das das Drehmoment mehrerer Aktoren bei verschiedenen Übersetzungsverhältnissen in Richtung der Räder des Fahrzeugs zusammenfasst, unter der Steuerung mehrerer Klauenkupplungen (C1, C2, C3), wovon mindestens zwei Kupplungen (C1, C3) von einem gemeinsamen Finger (10) gesteuert, der von einem Wählmotor (Ms) in einer ersten Richtung (Y) zwischen zwei parallelen Wechsellinien zur Auswahl einer davon, und von einem Wechselmotor (Me) in einer zweiten Richtung (X) orthogonal zur ersten zum Einlegen des einen oder anderen zweier Gänge über eine dazwischen liegende Neutralposition, verschiebbar ist, **dadurch gekennzeichnet, dass** bei Nichtvorliegen einer zuverlässigen Information über die axiale Position in (X) der Klaue einer ersten Kupplung (C1), die vom Finger (10) gesteuert wird, sichergestellt wird, dass sich diese Klaue bei jedem neuen Befehl zur Auskupplung einer Übersetzung immer in Neutral befindet,
- durch Steuerung des Wechselaktors (Me) in offener Schleife in Neutralposition,
- durch Betätigung des Wählaktors (Ms) des gemeinsamen Steuerfingers (10) in eine Auswahlposition während einer bestimmten Zeitspanne, und
- durch Beobachtung der tatsächlichen Verschiebung der Auswahl, um bestimmte Eingriffe nicht zuzulassen, bei Nichtvorhandensein einer Verschiebung oder einer zu geringen Verschiebung, wobei Neutral nicht bestätigt werden kann.

2. Steuerungsverfahren nach Anspruch 1, **dadurch gekennzeichnet, dass**:
- wenn die gesuchte Auswahlposition bei Ablauf der Zeitspanne erreicht ist, alle Übersetzungen des Getriebes zugelassen sind, nachdem die Neutralposition der ersten Kupplung (C1) ebenfalls bestätigt ist, und
- wenn die gesuchte Auswahlposition bei Ablauf der Zeitspanne nicht erreicht ist, die Auswahlsteuerung angehalten wird und keine der von den Kupplungen eingelegten Übersetzungen (C1, C3) zugelassen ist, wenn die Neutralposition der ersten Kupplung (C1) undefiniert bleibt.

3. Steuerungsverfahren nach Anspruch 1 oder 2, **dadurch gekennzeichnet, dass** die Zeitspanne die Ausführungszeit der Verschiebung der Klaue der ersten Kupplung (C1) von einer Übersetzung zu Neutral plus einen Sicherheitsspielraum umfasst.

4. Steuerungsverfahren nach Anspruch 1, 2 oder 3, **dadurch gekennzeichnet, dass**, wenn der Zustand des Signals zur Messung der axialen Position der ersten Kupplung (C1) fehlerhaft ist, die Position dieser Kupplung als undefiniert betrachtet wird.

5. Vorrichtung zur Steuerung der Übersetzungsänderungen an einem Hybridfahrzeuggetriebe, das das Drehmoment eines Verbrennungsmotors (1), der mit einer Primär-Vollwelle (5) verbunden ist, einer Haupt-Elektromaschine (3), die mit einer zur Primär-Vollwelle (5) konzentrischen Primär-Hohlwelle (6) verbunden ist, und einer Sekundär-Elektromaschine (4), die mit einer Welle zur Übertragung (8) an die Primär-Voll- und Hohlwelle (5, 6) verbunden ist, auf einer gemeinsamen Ausgangswelle in Richtung der Räder des Fahrzeugs zusammenfasst, unter der Steuerung dreier Klauenkupplungen (C1, C2, C3), die jeweils auf der Primär-Vollwelle (5), der Sekundärwelle (6) und der Übertragungswelle (8) angeordnet sind, wobei die erste und die dritte Kupplung (C1) und (C3) von einem selben Finger (10) gesteuert werden, der von einem Wählmotor (Ms) in eine erste Richtung (Y) zwischen zwei parallelen Wechsellinien und von einem Wechselmotor (Me) in eine zweite Richtung (X) orthogonal zur ersten zum Einlegen des einen oder anderen zweier Gänge auf der ausgewählten Linie, verschiebbar ist, **dadurch gekennzeichnet, dass** bei Nichtvorliegen einer zuverlässigen Information über die axiale Position in (X) der Klaue einer ersten Kupplung (C1) sichergestellt wird, dass sich deren Klaue bei jedem neuen Befehl zur Auskupplung einer Übersetzung immer in Neutral befindet,
- durch Steuerung des Wechselaktors (Me) in offener Schleife in Neutralposition,
- durch Betätigung des Wählaktors (Ms) in eine Auswahlposition während einer bestimmten Zeitspanne, und
- durch Beobachtung der tatsächlichen Verschiebung der Auswahl, um bestimmte Eingriffe nicht zuzulassen, bei Nichtvorhandensein einer Verschiebung oder einer zu geringen Verschiebung, wobei Neutral nicht bestätigt werden kann.

6. Steuerungsvorrichtung nach Anspruch 5, **dadurch gekennzeichnet, dass**:
- wenn die gesuchte Auswahlposition bei Ablauf der Zeitspanne erreicht ist, alle Übersetzungen des Getriebes zugelassen sind, nachdem die Neutralposition der ersten Kupplung (C1) ebenfalls bestätigt ist, und
- wenn die gesuchte Auswahlposition bei Ablauf der Zeitspanne nicht erreicht ist, die Auswahlsteuerung angehalten wird, keine der von den Kupplungen, die von demselben Finger gesteuert werden, eingelegten Übersetzungen (C1, C3) zugelassen ist, wenn die Neutralposition der ersten Kupplung (C1) undefiniert bleibt.

7. Steuerungsvorrichtung nach Anspruch 5 oder 6, **dadurch gekennzeichnet, dass** die Zeitspanne die Ausführungszeit der Verschiebung der Klaue der Kupplung von einer Verbrennungsübersetzung zu Neutral plus einen Sicherheitsspielraum umfasst.

8. Steuerungsvorrichtung nach einem der Ansprüche 5 bis 7, **dadurch gekennzeichnet, dass**, wenn der Zustand des Signals zur Messung der axialen Position der ersten Kupplung (C1) fehlerhaft ist, die Position dieser Kupplung als undefiniert betrachtet wird.

## Claims

1. Method for controlling changes in gear ratio on a hybrid vehicle transmission, combining the torque from several actuators on various transmission ratios bound for the wheels of the vehicle, under the control of several claw couplings (C1, C2, C3), of which at least two couplings (C1, C3) controlled by a common finger (10) that can be moved by a selection motor (Ms) in a first direction (Y) between two parallel gearshift lines in order to select one of them, and by a gearshift motor (Me) in a second direction (X) orthogonal to the first in order to engage the one or the other of two gears by passing through an intermediate neutral position, **characterized in that**, when no reliable information is available about the axial position along (X) of the claw of a first coupling (C1) controlled by the finger (10), it is checked that this claw is always in neutral on each new gear ratio disconnection order,
- by open-loop controlling the gearshift actuator (Me) to the neutral position,
- by actuating the selection actuator (Ms) of the common control finger (10) into a selection position for a given time period, and
- by observing the actual movement of the selection so as to not authorize certain engagements, in the event of no movement or insufficient movement where neutral cannot be confirmed.

2. Control method according to Claim 1, **characterized in that**:
- when the desired selection position has been reached at the end of the time period, all of the gear ratios of the transmission are authorized, after the neutral position of the first coupling (C1) has also been confirmed, and
- when the desired selection position has not been reached at the end of the time period, the selection guidance is stopped, and none of the gear ratios engaged by the couplings (C1, C3) is authorized, if the neutral position of the first coupling (C1) is still indefinite.

3. Control method according to Claim 1 or 2, **characterized in that** the time period comprises the execution time of the movement of the claw of the first coupling (C1) from a gear ratio to neutral, plus a safety margin.

4. Control method according to Claim 1, 2 or 3, **characterized in that**, when the state of the signal for measuring an axial position of the first coupling (C1) is faulty, the position of this coupling is considered to be indefinite.

5. Device for controlling changes in gear ratio on a hybrid vehicle transmission, combining the torque from an internal combustion engine (1) connected to a solid primary shaft (5), from a main electric machine (3) connected to a hollow primary shaft (6) concentric with the solid primary shaft (5) and from a secondary electric machine (4) connected to a transfer shaft (8) to the solid and hollow primary shafts (5, 6), on a common output shaft bound for the wheels of the vehicle, under the control of three claw couplings (C1, C2, C3) arranged respectively on the solid primary shaft (5), the secondary shaft (6) and the transfer shaft (8), the first and third couplings (C1) and (C3) being controlled by the same finger (10) that can be moved by a selection motor (Ms) in a first direction (Y) between two parallel gearshift lines, and by a gearshift motor (Me) in a second direction (X) orthogonal to the first in order to engage the one or the other of two gears on the selected line, **characterized in that**, when no reliable information is available about the axial position along (X) of the claw of a first coupling (C1), it is checked that the claw of said first coupling is always in neutral on each new gear ratio disconnection order,
- by open-loop controlling the gearshift actuator (Me) to the neutral position,
- by actuating the selection actuator (Ms) into a selection position for a given time period, and
- by observing the actual movement of the selection so as to not authorize certain engagements, in the event of no movement or insufficient movement, where neutral cannot be confirmed.

6. Control device according to Claim 5, **characterized in that**:
- when the desired selection position has been reached at the end of the time period, all of the gear ratios of the transmission are authorized, after the neutral position of the first coupling (C1) has also been confirmed, and
- when the desired selection position has not been reached at the end of the time period, the selection guidance is stopped, none of the gear ratios engaged by the couplings (C1, C3) controlled by the same finger is authorized, if the neutral position of the first coupling (C1) is still indefinite.

7. Control device according to Claim 5 or 6, **characterized in that** the time period comprises the execution time of the movement of the claw of the coupling from an internal combustion engine gear ratio to neutral, plus a safety margin.

8. Control device according to one of Claims 5 to 7, **characterized in that**, when the state of the signal for measuring an axial position of the first coupling (C1) is faulty, the position of this coupling is considered to be indefinite.
